# EUROPÄISCHE PATENTSCHRIFT

(11) **EP 2 586 083 B1**
(45) Veröffentlichungstag und Bekanntmachung des Hinweises auf die Patenterteilung: **02.07.2014**
(21) Anmeldenummer: 11725482.1
(22) Anmeldetag: 17.06.2011
(51) Int. Cl.: H01M 4/04, H01M 10/0562, H01M 10/052, H01M 4/131, H01M 4/1391, H01M 4/485, H01M 4/525, H01M 4/58, H01M 10/0525, H01M 10/0568, H01M 4/505, H01M 10/0569

(54) **KATHODE FÜR LITHIUM-IONEN AKKUMULATOREN**
CATHODE FOR LITHIUM ION RECHARGEABLE BATTERIES
CATHODE POUR PILES RECHARGEABLES AU LITHIUM

(30) Priorität: 24.06.2010 US 358042 P; 24.06.2010 EP 10167230
(43) Veröffentlichungstag der Anmeldung: 01.05.2013
(73) Patentinhaber: BASF SE, 67056 Ludwigshafen (DE)
(72) Erfinder: LEITNER, Klaus, 67059 Ludwigshafen (DE); SCHULZ-DOBRICK, Martin, 68165 Mannheim (DE); GOD, Colin, A-8010 Graz (AT); MOSER, Olivia, A-8010 Graz (AT); BAYER, Cornelia, A-8010 Graz (AT); KOLLER, Stefan, A-8010 Graz (AT)
(74) Vertreter: Baier, Martin
(86) Internationale Anmeldenummer: PCT/EP2011/060137
(87) Internationale Veröffentlichungsnummer: WO 2011/161019

(56) Entgegenhaltungen:
- EP-A1- 1 424 743
- DE-A1-102008 001 292
- US-A1- 2008 268 340

## Beschreibung

Die vorliegende Erfindung betrifft eine Kathode für Li-Ionen-Akkumulatoren mit verbesserter Zyklusstabilität sowie Li-Ionen-Akkumulatoren, die diese Kathode enthalten. Mit den erfindungsgemäßen Kathoden lassen sich langlebige Li-Ionen-Akkumulatoren mit hoher Zellspannung realisieren.

Es besteht ein großer Bedarf an Batterien und Akkumulatoren als Stromquellen in tragbaren Geräten wie Digitalkameras und Notebooks. Die Batterien und Akkumulatoren sollten für diesen Zweck eine möglichst hohe Energiedichte und eine möglichst lange Lebensdauer aufweisen. Bei den Akkumulatoren tritt hinzu, dass sie möglichst viele Lade-/Entladezyklen durchlaufen können sollten, ohne dass ihre Kapazität dabei abnimmt.

Lithium besitzt eines der höchsten negativen Potentiale aller chemischen Elemente. Batterien und Akkumulatoren mit einer auf Lithium basierende Anode weisen daher sehr hohe Zellspannungen und sehr hohe theoretische Kapazitäten auf. Unter den auf Lithium basierenden Akkumulatoren besitzen Li-Ionen-Akkumulatoren besondere Vorteile, da diese kein metallisches Lithium enthalten, das mit den in den Akkumulatoren vorhandenen Elektrolyten reagieren und so zu Sicherheitsproblemen führen kann. Die Zellspannung in einem Li-lonen-Akkumulator wird durch die Verschiebung von Li-lonen erzeugt.

Als Anodenmaterial für Li-Ionen-Akkumulatoren werden üblicherweise Verbindungen eingesetzt, die Li-Ionen einlagern und abgeben können, beispielsweise Graphit.

Übliche kathodenaktive Materialien sind Lithium-Metalloxide wie LiCoO₂, LiNiO₂ und LiMn₂O₄. Die elektrochemischen Reaktionen dieser Materialien laufen typischerweise bei einem Potenzial von etwa 3 bis 4 V ab. Einen Weg, die Leistungsfähigkeit von LiIonen-Akkumulatoren zu erhöhen, ist der Einsatz von kathodenaktiven Materialien, bei denen die elektrochemischen Reaktionen bei höheren Potenzialen ablaufen. Ein Beispiel für ein derartiges kathodenaktives Material ist LiNi_{0,5}Mn_{1,5}O₄, dessen elektrochemische Reaktionen in einem Spannungsfenster von 4,5 bis 4,9 V ablaufen. Problematisch beim Einsatz derartiger kathodenaktiver Materialien ist, dass die bekannten und üblicherweise in Li-Ionen-Akkumulatoren eingesetzten organischen Elektrolytsysteme bei Spannungen oberhalb 4,5 V oxidativ zersetzt werden. Die Elektrolytkomponenten werden dabei irreversibel zerstört und die dabei entstandenen Gase erzeugen einen erheblichen Druckanstieg, was die Sicherheit des Li-Ionen-Akkumulators beeinträchtigen kann, da es ab einem gewissen Druck bis zur Explosion des Akkumulators kommen kann.

Bei Li-Ionen-Akkumulatoren, die als Leitsalz LiPF₆ und im kathodenaktiven Material vierwertiges Mangan enthalten, tritt als weiteres Problem die teilweise Auflösung der kathodenaktiven Schicht hinzu. Enthält ein Elektrolyt Spuren von Wasser, so entsteht wegen der Reaktion des Wassers mit dem Leitsalz Flusssäure, wodurch das Mangan als zweiwertiges Mangan aus der Aktivschicht gelöst und auf der Anode abgeschieden wird.

Von S. Patoux et al., J. of Power Sources 189 (2009), Seiten 344-352 wird eine Lösung dieses Problems beschrieben, bei der dem flüssigen Elektrolyten ein Additiv zugesetzt wird, der die Grenzfläche zwischen der Kathode und dem Elektrolyten schützen und die Selbstentladung hemmen soll. Das Additiv bildet dabei eine Schutzschicht zwischen Kathode und Elektrolyt. Damit lässt sich jedoch nur eine beschränkte Auswahl an Materialien als Schutzschicht einsetzen.

Aus Y. Fan et al., Electrochimica Acta 52 (2007), Seiten 3870-3875 und H. M. Wu et al., J. of Power Sources 195 (2010), Seiten 2909-2913 ist bekannt, Nanopartikel des kathodenaktiven Materials mit SiO₂, ZrO₂ oder ZrP₂O₇ zu beschichten und diese beschichteten Partikel als kathodenaktives Material zu verwenden. Dabei ist die Herstellung der beschichteten Partikel an sich vergleichsweise aufwendig, zudem sind die einzelnen Partikel untereinander jeweils durch die aufgebrachte Beschichtung voneinander getrennt, was eine Erhöhung des inneren Widerstands in der Kathode zur Folge hat. Aus der EP 142 4743 A1 ist die Herstellung von Elektroden durch Beschichten der Elektroden mit einem Fest körper elektrolyten bekannt.

Aufgabe der vorliegenden Erfindung ist die Bereitstellung von Kathoden für Li-lonen-Akkumulatoren und Li-Ionen-Akkumulatoren mit einer langen Lebensdauer bei einer hohen Anzahl von Lade-/Entladezyklen mit einer vergleichsweise geringeren Abnahme der Kapazität. Insbesondere sollen mit den erfindungsgemäßen Kathoden Li-lonen-Akkumulatoren hergestellt werden können, die Zellspannungen von mindestens 4 V, insbesondere von mindestens 4,5 V besitzen und ebenfalls eine lange Lebensdauer aufweisen.

Diese Aufgabe wird erfindungsgemäß gelöst durch eine Kathode (A) für einen Li-lonen-Akkumulator umfassend
(a1) mindestens einen Stromsammler,
(a2) mindestens eine Schicht enthaltend mindestens ein kathodenaktives Li-Ionen einlagerndes/abgebendes Material,
wobei mindestens ein Teil der Schicht (a2) verdichtet ist und die der Anode zugewandte Seite der Schicht (a2) mindestens eine Schicht (a3) aufweist, die mindestens einen Li-Ionen leitenden Festelektrolyt enthält, wobei der Festelektrolyt aus der Gruppe bestehend aus anorganischen Festelektrolyten sowie Mischungen davon ausgewählt ist und in dem im Li-Ionen-Akkumulator verwendeten Elektrolytsystem (B) nicht löslich ist, charakterisiert dadurch, dass auf die noch nicht verdichtet vorliegende, mindestens eine Schicht (a2) zunächst eine Schicht (a3) enthaltend mindestens einen Li-Ionen leitenden Festelektrolyten aufgebracht wird, anschliessend die Schichten (a2) und (a3) gemeinsam verdichtet werden und anschliessend eine weitere Schicht (a3) enthaltend mindestens einen Li-Ionen leitenden Festelektrolyten aufgebracht wird,
und durch Li-Ionen-Akkumulatoren enthaltend die vorstehend beschriebenen Kathoden (A).

Bei den erfindungsgemäßen Kathoden für Li-Ionen-Akkumulatoren wird der Kontakt zwischen dem in der Kathode befindliche katodenaktive Material und dem Elektrolytsystem deutlich verringert und die durch diesen Kontakt hervorgerufenen Alterungserscheinungen wie starke Kapazitätsabnahme oder Druckanstieg vermindert. Liegt zumindest ein Teil des in Schicht (a2) enthaltenen kathodenaktiven Materials verdichtet vor, dann weist die verdichtete Schicht eine geringere Porosität auf und bietet einem flüssigen Elektrolyt weniger Angriffsfläche. Zudem wird die Oberfläche der das kathodenaktive Material enthaltenen Schicht mit einer Schicht aus einem Festelektrolyten geschützt und schirmt das kathodenaktive Material vor einem direkten Kontakt mit dem flüssigen Elektrolytsystem vollständig ab. Im Vergleich zu Schutzschichten, die nicht Li-Ionen leitend sind, weisen die erfindungsgemäßen Schutzschichten auf Lithium leitenden Festelektrolyten eine hohe Li-Ionen-Leitfähigkeit auf, so dass bei gleich großer Erhöhung des Widerstandes gegenüber dem Fluss der Lithium-Ionen die Schicht zwischen flüssigem Elektrolytsystem und kathodenaktivem Material dicker und dichter, d.h. weniger porös gestaltet werden kann. Dadurch wird die Elektrolytzersetzung wesentlich besser gehemmt. Erfindungsgemäss Lassen sich Kathoden mit besonders guten Eigenschaften erhalten, wenn auf die noch nicht verdichtet vorliegende, mindestens eine Schicht (a2) zunächst eine Schicht (a3) enthaltend mindestens einen Li-Ionen leitenden Festelektrolyten aufgebracht wird, anschließend die Schichten (a2) und (a3) gemeinsam verdichtet werden und anschließend eine weitere Schicht enthaltend mindestens einen Li-Ionen leitenden Festelektrolyten aufgebracht wird. Die Verdichtung kann beispielsweise durch Dickereduktion mittels Kalandrieren erzielt werden.

Bei Verwendung der erfindungsgemäßen Kathoden muss das in den Li-lonen-Akkumulatoren verwendete flüssige Elektrolytsystem nur noch auf die Anode abgestimmt werden. Neben den herkömmlichen anodenaktiven Materialien mit einem Potential zwischen 3 und 4 V können in den erfindungsgemäßen Kathoden prinzipiell alle kathodenaktive Materialien eingesetzt werden, die ein Potenzial oberhalb 4,5 V aufweisen, da der direkte Kontakt zwischen diesen Materialien und dem flüssigen Elektrolytsystem deutlich vermindert wird. Daher können trotz der bereits angesprochenen Problematik bezüglich der oxidativen Stabilität der Elektrolytsysteme die herkömmlich gebräuchlichen Elektrolytsysteme auch mit kathodenaktiven Materialien mit einem Potential von 4,5 V und mehr eingesetzt werden. Li-Ionen-Akkumulatoren mit den erfindungsgemäßen Kathoden weisen stabilere Kapazitäten in Langzeitversuchen auf. Weiterhin sind die erfindungsgemäßen Li-Ionen-Akkumulatoren stabiler gegenüber Temperaturerhöhungen.

Im Folgenden wird die Erfindung ausführlich erläutert.

Ein "Akkumulator" bedeutet im Rahmen der Erfindung eine wiederaufladbare elektrochemische Zelle, auch sekundäre Zelle genannt.

Im Rahmen der vorliegenden Erfindung wird mit "Anode" die negativ geladene Elektrode der elektrochemischen Zelle bezeichnet. An der negativen Elektrode findet beim Laden eines Akkumulators die Reduktion statt, in einem Li-Ionen-Akkumulator werden an der Anode beim Ladevorgang Lithium-Ionen eingelagert. Beim Entladen findet an der negativen Elektrode eine Oxidation statt, bei einem Li-Ionen-Akkumulator werden dabei die eingelagerten Lithium-Ionen abgegeben. Die Gegenelektrode wird "Kathode" genannt.

Der Begriff "anodenaktives Material" bzw. "kathodenaktives Material" bezeichnet im Rahmen der vorliegenden Erfindung Materialien, Verbindungen und/oder Substanzen, die als elektrochemisch aktive Materialien/Verbindungen/Substanzen in der Anode bzw. der Kathode von Li-Ionen-Akkumulatoren eingesetzt werden können, insbesondere Li-Ionen einlagernde/abgebende Materialien/Verbindungen/Substanzen. Dabei kann es sich um einzelne Verbindungen, Materialien oder Substanzen handeln, es können jedoch auch Mischungen aus verschiedenen Materialien/Verbindungen/Substanzen darunter zusammengefasst sein.

Die Elektroden des erfindungsgemäßen Li-Ionen-Akkumulators enthalten üblicherweise einen Stromsammler, der den Elektronenfluss zwischen der jeweiligen Elektrode und dem externen Stromkreislauf erleichtert. Der Stromsammler dient häufig auch als Substrat, auf dem mindestens eine Schicht enthaltend mindestens ein anodenaktives bzw. kathodenaktives Material aufgebracht ist. Im Falle der erfindungsgemäßen Kathode (A) ist auf dem ggf. vorhandenen Stromsammler die mindestens eine Schicht (a2) enthaltend mindestens ein kathodenaktives Material aufgebracht. Der Stromsammler ist üblicherweise aus Metall, beispielsweise in Form einer Metallfolie oder eines Metallgitters. Als Metall wird vorzugsweise Nickel, Aluminium, Edelstahl, Kupfer und Ähnliches verwendet. Für die Kathode wird erfindungsgemäß ein Stromsammler aus Aluminium bevorzugt, für die Anode ist Kupfer als Material für den Stromsammler bevorzugt.

Erfindungsgemäß können prinzipiell alle dem Fachmann als kathodenaktiv bekannte Materialien in der mindestens einen Schicht (a2) eingesetzt werden. Dazu gehören unter anderem Lithium aufnehmende und abgebende Metalloxidzusammensetzungen. So können LiCoO₂, LiNiO₂, LiMn₂O₂, LiMnO₄, Spinelle des Typs LiMₓMn₂₋ₓO₄ mit M ausgewählt aus der Gruppe bestehend aus Cr, Ni, Co, Cu und/oder Fe, wobei 0 ≤ x ≤ 1 ist, Lithium enthaltende Mischoxide mit Ni, Mn und/oder Co mit weiteren Metallen ausgewählt aus Mg, Zn, Al, Ga, W, Zr, Ti, Ca, Ce, Y und/oder Nb und LiFePO₄ und Mischungen davon eingesetzt werden, bevorzugt werden kathodenaktive Materialien eingesetzt, deren elektrochemische Reaktionen bei mindestens 3 V, bevorzugt bei mindestens 4,2 V und besonders bevorzugt bei mindestens 4,5 V erfolgen. Besonders bevorzugt werden erfindungsgemäß die Spinelle des Typs LiMₓMn₂₋ₓO₄ mit M ausgewählt aus der Gruppe bestehend aus Cr, Ni, Co, Cu und/oder Fe und Mischungen davon, wobei 0 ≤ x ≤ 1 ist, verwendet.

Neben dem mindestens einen kathodenaktiven Material kann die mindestens eine Schicht (a2) Bindemittel wie Polyvinylidenfluorid, Polyethylenoxid, Polyethylen, Polypropylen, Polytetrafluorethylen, Polyacrylate, Ethylenpropylendienmonomercopolymer (EPDM) und Mischungen und Copolymere davon enthalten. Falls die Schicht (a2) ein Bindemittel enthält, liegt dieses üblicherweise in einer Konzentration von 1 bis 20 Gew.-%, bevorzugt in einer Konzentration von 2 bis 15 Gew.-%, bezogen auf das Gesamtgewicht der mindestens einen Schicht (a2) vor.

Darüber hinaus kann die mindestens eine Schicht (a2) ein oder mehrere elektrisch leitfähige Materialien enthalten, beispielsweise Graphit, Ruß, Kohlenstofffasern wie Kohlefasern, Graphitfasern oder sogenannte "Carbon-nano-tubes", Metallpulver wie Silberpulver, Metallfasern wie Edelstahlfasern und Ähnliches sowie Mischungen davon. Falls die Kathode ein oder mehrere derartige leitfähige Materialien enthält, liegen diese üblicherweise in einer Konzentration von 1 bis 25 Gew.-%, bevorzugt von 2 bis 15 Gew.-%, bezogen auf das Gesamtgewicht der mindestens einen Schicht (a2) vor. Das oder die elektrisch leitfähigen Materialien sind von den kathodenaktiven Materialien verschieden.

Falls die Kathode einen flächenförmigen Stromsammler (a1) aufweist, kann dieser auf einer Seite oder auf beiden Seiten eine oder mehrere Schichten (a2) aufweisen.

In der erfindungsgemäßen Kathode (A) liegt mindestens ein Teil der mindestens einen Schicht (a2) verdichtet vor. "Verdichtet" bedeutet im Rahmen der Erfindung, dass die Dichte durch Einwirkung äußerer Kräfte erhöht wurde, so dass der verdichtete Teil der mindestens einen Schicht (a2) eine höhere Dichte aufweist als vor dem Einwirken der äußeren Kräfte, bevorzugt liegt die gesamte mindestens eine Schicht (a2) verdichtet vor.

Erfindungsgemäß bevorzugt wird durch das Verdichten die Dichte um mindestens 10 % erhöht, besonders bevorzugt um mindestens 30 %, ganz besonders bevorzugt um mindestens 50 % und insbesondere bevorzugt um mindestens 60 % erhöht, bezogen auf die Dichte vor Einwirkung der äußeren Kräfte. Die äußeren Kräfte, durch die das Verdichten hervorgerufen wird, können beispielsweise durch Pressen, Walzen und/oder Kalandrieren aufgebracht werden. Üblicherweise geht mit dem Verdichten mindestens eines Teils oder der gesamten Schicht (a2) und der Schicht (a3) eine Dickereduktion einher, erfindungsgemäß bevorzugt ist eine Dickereduktion der mindestens einen Schicht (a2) und der Schicht (a3) um mindestens 10 %, besonders bevorzugt um mindestens 30 %, ganz besonders bevorzugt um mindestens 50 % und insbesondere bevorzugt um mindestens 60 %, bezogen auf die Gesamtdicke der mindestens einen Schicht (a2) und der Schicht (a3) vor Einwirken der äußeren Kräfte. Durch das Verdichten wird die Porosität der Schicht (a2) herabgesetzt, das sich im Inneren der mindestens einen Schicht (a2) befindliche kathodenaktive Material ist für den schädlich wirkenden Elektrolyten weniger leicht zugänglich. Li-Ionen-Akkumulatoren, in denen die mindestens eine Schicht (a2) verdichtet vorliegt, zeigen eine verringerte Kapazitätsabnahme im Vergleich zu Li-Akkumulatoren, in denen die das kathodenaktive Material enthaltende Schicht nicht verdichtet vorliegt. Bei der Verdichtung liegt die Kathode üblicherweise im getrockneten Zustand vor, die angegebenen prozentualen Werte für die Reduktion der Dichte bzw. Dicke beziehen sich ebenfalls auf die Kathode im getrockneten Zustand. Getrockneter Zustand bedeutet, dass gegebenenfalls bei Aufbringen der Schichten (a2) und (a3) verwendetes Lösungsmittel und/oder flüchtige Hilfsmittel entfernt worden sind.

Gemäß der Erfindung weist die Kathode mindestens eine auf (a2) aufgebrachte Schicht enthaltend mindestens einen Li-Ionen leitenden Festelektrolyten auf. Die mindestens eine Schicht (a3) ist erfindungsgemäß so aufgebracht, dass das in der Kathode enthaltende mindestens eine kathodenaktive Material vor Kontakt mit dem flüssigen Elektrolytsystem geschützt ist, die Schicht (a3) trennt und schützt das in (a2) enthaltene mindestens eine kathodenaktive Material vor dem im Li-lonen-Akkumulator enthaltenen Li-Ionen leitenden, flüssigen Elektrolytsystem. Die mindestens eine Schicht (a3) ist auf der Seite der Schicht (a2) aufgebracht, die der Anode bzw. dem zwischen Anode und Kathode befindlichen flüssigen Elektrolytsystem zugewandt ist. Falls die Kathode auf zwei Seiten jeweils mindestens eine Schicht (a2) aufweist, die jeweils der Anode bzw. dem zwischen Anode und Kathode befindlichen flüssigen Elektrolytsystem zugewandt sind, beispielsweise wenn der Li-Ionen-Akkumulator in Form einer Wicklung vorliegt, sind können jeweils beide Schichten (a2) mit einer Schicht (a3) versehen sein.

Der mindestens eine Li-Ionen leitende Festelektrolyt ist erfindungsgemäß aus anorganischen Festelektrolyten und Mischungen davon ausgewählt. Unter die anorganischen Festelektrolyte fallen zum einen Oxide von Metallen und Halbmetallen, die an sich als Nicht-Leiter bekannt sind, jedoch Li-Ionen leiten können, wenn die Schicht aus dem Oxid ausreichend dünn ist, d.h. diese Schichten weisen erfindungsgemäß eine Dicke von 1 nm bis 50 Mikrometer auf, bevorzugt liegt die Dicke bei 10 nm bis 4 Mikrometer. Zu den Oxiden von Metallen und Halbmetallen, die in dieser Art verwendet werden können, zählen beispielsweise Al₂O₃, SiO₂, ZrO₂ und TiO₂.

Weiterhin zählen zu den anorganischen Festelektrolyten, die erfindungsgemäß verwendet werden können, die dem Fachmann allgemein als Li-Ionen leitend bekannten keramischen, glasartigen und glaskeramischen Festelektrolyte. Bevorzugt sind diese keramischen, glasartigen und glaskeramischen Festelektrolyte ausgewählt aus Oxiden, Sulfiden, Phosphaten und Mischungen davon. Darunter fallen auch die als LISICON (Lithium Super lonic Conductor) und thio-LISICON bekannten Lithium-Ionen-Leiter. Die keramischen, glasartigen und glaskeramischen Festelektrolyte umfassen unter anderem die Gruppe bestehend aus Li₂S-P₂S₅, Li₂S-P₂S₅-Li₄SiO₄, Li₂S-Ga₂S₃-GeS₂, Li₂S-Sb₂S₃-GeS₂, Li_{3,25}Ge_{0,25}P_{0,75}S₄, Li_{4,2}Ge_{0,8}Ga_{0,2}S₄, Li₂,₂Zn_{0,1}Zr_{1,9}S₃, Li₂S-GeS₂-P₂S₅, Li₂S-SiS₂-Al₂S₃, Li₂S-SiS₂-P₂S₅, Li₂S-SiS₂, Li₃PO₄-Li₂S-SiS₂, Li₂S-SiS₂-Li₄SiO₄, (La,Li)TiO₃ wie Li_{0,5}La_{0,5}TiO₃, Li₂₋ₓMg₂ₓTiO₃₊ₓ, Li₂ₓZn₂₋₃ₓTi₁₊ₓO4, Li₅La₃Ta₂O₁₂, Li₆La₂CaTa₂O₁₂, Li₆La₂CaNb₂O₁₂, Li₆La₂SrNb₂O₁₂, Li₂Nd₃TeSbO₁₂, Li₃BO_{2,5}N_{0,5}, Li₉SiAlO₈, Li₂₊₂ₓZn₁₋ₓGeO₄, Li₁₊ₓAlₓGe₂₋ₓ(PO₄)₃, Li₁₊ₓTi₂₋ₓAl(PO₄)₃, Li₁₊ₓTi₂₋ₓAlₓSi_{y}(PO₄)_{3-y}, LiTi_{0,5}Zr_{1,5}(PO₄)₃, LiₓAlZr[PO₄]₃ und Li₃Fe₂(PO₄)₃.

Erfindungsgemäß bevorzugt wird der mindestens eine Li-Ionen-leitende Festelektrolyt ausgewählt aus der Gruppe bestehend aus den Oxiden Al₂O₃, SiO₂, ZrO₂ und TiO₂ mit einer Schichtdicke von 1 nm bis 50 Mikrometer, bevorzugt von 10 nm bis 4 Mikrometer und den keramischen, glasartigen oder glaskeramischen Festelektrolyten Li₂S-P₂S₅, Li₂S-P₂S₅-Li₄SiO₄, Li₂S-Ga₂S₃-GeS₂, Li₂S-Sb₂S₃-GeS₂, Li_{3,25}Ge_{0,25}P_{0,75}S₄, Li_{4,2}Ge_{0,8}Ga_{0,2}S₄, Li_{2,2}Zn_{0,1}Zr_{1,9}S₃, Li₂S-GeS₂-P₂S₅, Li₂S-SiS₂-Al₂S₃, Li₂S-SiS₂-P₂S₅, Li₂S-SiS₂, Li₃PO₄-Li₂S-SiS₂, Li₂S-SiS₂-Li₄SiO₄, (La,Li)TiO₃ wie Li_{0,5}La_{0,5}TiO₃, Li₂₋ₓMg₂ₓTiO₃₊ₓ, Li₂ₓZn₂₋₃ₓₓTi₁₊ₓO₄, Li₅La₃Ta₂O₁₂, Li₆La₂CaTa₂O₁₂, Li₆La₂CaNb₂O₁₂, Li₆La₂SrNb₂O₁₂, Li₂Nd₃TeSbO₁₂, Li₃BO_{2,5}N_{0,5}, Li₉SiAlO₈, Li₂₊₂ₓZn₁₋ₓGeO₄, Li₁₊ₓAlₓGe₂₋ₓ(PO₄)₃, Li₁₊ₓTi₂₋ₓAlₓ(PO₄)₃, Li₁₊ₓTi₂₋ₓAlₓSi_{y}(PO₄)_{3-y}, LiTi_{0,5}Zr_{1,5}(PO₄)₃, LiₓAlZr[PO₄]₃ und Li₃Fe₂(PO₄)₃.

Die mindestens eine Schicht (a2) kann einen Festelektrolyt oder mehr Festelektrolyte enthalten und/oder eine, zwei oder mehr Schichten, die jeweils einen oder mehr Festelektrolyte enthalten, umfassen.

Eine Übersicht über anorganische Li-Ionen leitende Festelektrolyte für Li-Ionen-Batterien findet sich bei J.W. Fergus, J. of Power Sources 195 (2010), S. 4554-4569.

Li-Ionen-Akkumulatoren umfassen neben Kathode und Anode mindestens ein Li-Ionen leitendes Elektrolytsystem, sehr häufig ein flüssiges Elektrolytsystem (B). Das Elektrolytsystem ist dabei zwischen Anode und Kathode angeordnet und dient dem Transport der Li-Ionen zwischen Anode und Kathode. Erfindungsgemäß ist der mindestens eine in (a3) enthaltene Li-Ionen leitende Festelektrolyt nicht in dem für den Li-lonen-Akkumulator eingesetzten flüssigen Elektrolytsystem (B) löslich. Auf diese Weise wird die schützende Schicht (a3) enthaltend den Festelektrolyten durch das flüssige Elektrolytsystem nicht angegriffen und schützt das kathodenaktive Material vor dem Kontakt mit dem flüssigen Elektrolytsystem. "Nicht löslich" bedeutet gemäß der Erfindung, dass mindestens 1 Gew.-%, bevorzugt mindestens 50 Gew.-%, besonders bevorzugt mindestens 90 Gew.-% und insbesondere mindestens 99 Gew.-% des mindestens einen Li-Ionen leitenden Festelektrolyten in dem flüssigen Elektrolytsystem (B) nicht löslich ist, bezogen auf das Gesamtgewicht aus gelöstem Festelektrolyt und nicht gelöstem Festelektrolyt.

Umgekehrt soll die mindestens einen Festelektrolyt enthaltende Schicht (a3) möglichst wenig von dem(n) im flüssigen Elektrolytsystem enthaltenen Lösungsmittel(n) aufnehmen, bevorzugt soll die Schicht (a3) höchstens 99 Gew.-%, mehr bevorzugt höchstens 50 Gew.-%, besonders bevorzugt höchstens 10 Gew.-% und insbesondere höchstens 1 Gew.-% an Lösungsmittel(n) aus dem flüssigen Elektrolytsystem aufnehmen, bezogen auf das Gesamtgewicht der Schicht (a3) vor Kontakt mit dem flüssigen Elektrolytsystem. Die Schicht (a3) soll somit soweit möglich inert gegenüber dem flüssigen Elektrolytsystem und dem(n) darin enthaltenen Lösungsmittel(n) sein, dies bedeutet, sie soll weder durch das flüssige Elektrolytsystem angelöst oder gar aufgelöst werden, noch soll die Schicht (a3) im flüssigen Elektrolytsystem enthaltene Lösungsmittel beispielsweise durch Quellung und/oder Diffusion aufnehmen und zum kathodenaktiven Material weiterleiten.

Gemäß der erfindungsgemäßen Kathode (A) liegt die gesamte mindestens eine Schicht (a2) verdichtet vor, und die der Anoden bzw. dem flüssigen Elektrolytsystem zugewandte Seite der mindestens einen Schicht (a2) weist mindestens eine Schicht (3) auf, die mindestens einen Li-Ionen leitenden Festelektrolyt enthält, wobei der Festelektrolyt aus der Gruppe bestehend aus anorganischen und polymeren Festelektrolyten sowie Mischungen davon ausgewählt und in dem im Li-Ionen-Akkumulator verwendetem Elektrolytsystem (B) nicht löslich ist. Erfindungsgemäss wird mindestens eine Schicht (a3) auf die unverdichtete Schicht (a2) aufgebracht, so dass ein Teil des in der Schicht (a3) enthaltenen Li-leitenden Festelektrolyten in möglicherweise in der Schicht (a2) enthaltenen Poren eindringt, anschließend werden die Schichten (a2) und (a3) gemeinsam verdichtet und dann eine weitere Schicht (a3) aufgebracht wird. Diese Kathoden zeigen eine besonders gute Stabilität bei Lanzeitversuchen.

Eine bevorzugte Ausführungsform der Erfindung betrifft die Kathode (A) für einen Li-Ionen-Akkumulator umfassend
(a1) mindestens einen Stromsammler,
(a2) mindestens eine Schicht enthaltend mindestens ein kathodenaktives Li-Ionen einlagerndes/abgebendes Material,
wobei die der Anode zugewandte Seite der Schicht (a2) eine Schicht (a3) aufweist, die mindestens einen Li-Ionen leitenden Festelektrolyt enthält, wobei der Festelektrolyt aus der Gruppe bestehend aus anorganischen Festelektrolyten sowie Mischungen davon ausgewählt ist und in dem im Li-Ionen-Akkumulator verwendeten Elektrolytsystem (B) nicht löslich ist. Die Kathode (A) weist dabei eine weitere Schicht (a3) auf der vorherigen Schicht (a3) auf, die nach Verdichten von (a2) und (a3) aufgebracht wird.

Weiterer Gegenstand der Erfindung ist ein Verfahren zur Herstellung der vorstehend beschriebenen Kathode (A) umfassend die Schritte
(i) Bereitstellen mindestens einer Schicht (a2) enthaltend mindestens ein kathodenaktives Material und mindestens einen Stromsammler,
(ii) Aufbringen mindestens einer Schicht (a3) enthaltend mindestens einen Festelektrolyt auf die Schicht (a2)
(iii) Verdichten der Schicht (a2) und der Schicht (a3),
(iv) Aufbringen mindestens einer weiteren Schicht (a3) enthaltend mindestens einen Festelektrolyt auf die Schicht (a2),
sowie die nach diesem Verfahren herstellbaren Kathoden (A).

Einzelne oder auch alle Schritte können dabei wiederholt werden.

Schritt (i) ist dem Fachmann prinzipiell bekannt. Beispielsweise kann das mindestens eine kathodenaktive Material, gegebenenfalls vermischt mit Bindemittel und weiterem leitfähigen Hilfsmittel, mit einem oder mehreren Lösungsmitteln vermischt zu einer Dispersion verarbeitet werden, die auf eine oder beiden Oberflächen eines Stromsammlers, beispielsweise einer Aluminiumfolie, aufgebracht und anschließend getrocknet werden.

In Schritt (ii) wird auf die präparierte Kathode umfassend mindestens eine Schicht (a2) enthaltend mindestens ein kathodenaktives Material ggf. mindestens eine Schicht (a3) enthaltend mindestens einen Festelektrolyt aufgebracht. Dazu wird üblicherweise eine Dispersion des Festelektrolyten in einem Dispersionsmedium hergestellt und dieses auf der mindestens einen Schicht (a2) aufgebracht. Dies kann beispielsweise durch Atmospheric-Pressure Ion Deposition, Tintenstrahldruck oder pneumatisch, beispielsweise durch Sprühen, erfolgen. Dabei können organische Lösungsmittel als Dispersionsmittel verwendet werden, wie zum Beispiel Ethanol oder Propylencarbonat.

Der Atmospheric-Pressure Ion Deposition (APID) liegt das Prinzip zugrunde, dass eine Lösung des zu verarbeitenden Materials durch eine Kapillare gepumpt wird, an die ein hohes elektrostatisches Potenzial gegenüber ihrer Umgebung angelegt wird. Dadurch kommt es zum elektrostatischen Versprühen der Lösung und zur Bildung von Ionen des Materials nach dem Mechanismus der Electrospray Ionisation. Die unter Atmosphärendruck gebildeten Pseudomolekül-Ionen werden in weiterer Folge gezielt auf ein Substrat abgeschieden.

Ein wesentlicher Unterschied zu anderen verwandten Methoden zum Aufbringen dünner Schichten wie dem Inkjet-Printing besteht darin, dass die Ionen bei der APID "trocken", d.h. ohne Dispergiermittel auf dem Target auftreffen. Dies besitzt den Vorteil, dass kein Lösungsmittel auf die zu beschichtende Oberfläche auftrifft. Wenn noch Lösungsmittel beim Auftreffen vorhanden wäre, könnte dieses die bis zu diesem Zeitpunkt bereits gebildeten Schichten anlösen und zerstören. Derartige Vorgänge können beispielsweise beim Spincoating beobachtet werden.

Schritt (iii) wurde bereits vorstehend beschrieben. Wurde vorher Schritt (ii) durchgeführt, werden in Schritt (iii) beide vorhandenen Schichten (a2) und (a3) verdichtet.

Schritt (iv) wird in Analogie zu Schritt (ii) durchgeführt.

Mit dem beschriebenen Verfahren können auch Kathoden mit mehreren Folgen von Schichten (a2) und (a3) hergestellt werden, in dem noch mindestens ein weiterer Schritt (v) durchgeführt wird, in dem mindestens eine weitere Schicht (a2) enthaltend mindestens ein kathodenaktives Material aufgebracht wird. Danach können je nach gewünschtem Ergebnis die Schritte (ii) bis (iv) und ggf. auch (v) wiederholt werden.

Weiterer Gegenstand der Erfindung sind Li-Ionen-Akkumulatoren umfassend
(A) eine Kathode wie vorstehend beschrieben,
(B) ein Li-Ionen leitendes flüssiges Elektrolytsystem und
(C) eine Anode.

Das flüssige Li-Ionen leitende Elektrolytsystem enthält bevorzugt
(b1) mindestens ein nicht wässriges Lösungsmittel und
(b2) mindestens ein Li-Ionen enthaltendes Elektrolytsalz.

Das mindestens eine nicht wässrige Lösungsmittel kann aus den üblichen, dem Fachmann als Lösungsmittel für Elektrolytsysteme in Li-Ionen-Batterien bekannten Lösungsmitteln ausgewählt sein, beispielsweise aus N-Methylacetamid, Acetonitril, Carbonate, Sulfolane, Sulfone, N-substituierte Pyrrolidone, azyklische Ether, zyklische Ether, Xylol, Polyether und Siloxanen. Unter die Carbonate fallen Methylcarbonat, Ethylcarbonat und Propylcarbonat, unter die Polyether fallen beispielsweise Glyme umfassend Diethylenglykoldimethylether (Diglyme), Triethylenglykoldimethylether (Triglyme), Tetraethylenglykoldimethylether (Tetraglyme) und höhere Glyme, weiterhin Ethylenglykoldivinylether, Diethylenglykoldivinylether, Triethylenglykoldivinylether, Dipropylenglykoldimethylether und Butylenglykolether.

Azyklische Ether umfassen beispielsweise Dimethylether, Dipropylether, Dibutylether, Dimethoxymethan, Trimethoxymethan, Dimethoxyethan, Trieetoxymethan, 1,2-Dimethoxypropan und 1,3-Dimethoxypropan.

Die zyklischen Ether umfassen Tetrahydrofuran, Tetrahydropyran, 2-Methyltetrahydrofuran, 1,4-Dioxan, Trioxan und Dioxolane.

Erfindungsgemäß bevorzugt werden als nicht wässrige Lösungsmittel für das Elektrolytsystem Ethylencarbonat, Propylencarbonat und Mischungen davon eingesetzt. Als Li-Ionen enthaltendes Elektrolytsalz können die üblichen, dem Fachmann für die Verwendung in Lithium-Batterien und Li-Akkumulatoren bekannten Elektrolytsalze verwendet werden. Beispielsweise kann das mindestens eine Li-Ionen enthaltende Elektrolytsalz (b2) ausgewählt werden aus der Gruppe bestehend aus LiPF₆, LiBF₄, LiB(C₆H₅)₄, LiSbF₆, LiAsF₆, LiClO₄, LiCF₃SO₃, Li(CF₃SO₂)₂N, LiC₄F₉SO₃, LiAlO₄, LiAlCl₄, LiN(CₓF₂ₓ₊₁SO₂)(C_{y}F_{2y+1}SO₂), LiSCN, LiCl, LiBr und LiI sowie Mischungen davon.

Weiterhin enthält der erfindungsgemäße Li-Ionen-Akkumulator eine Anode (C). Dabei kann jede üblicherweise in Li-Ionen-Akkumulatoren einsetzbare Anode verwendet werden. Üblicherweise enthält die Anode mindestens ein anodenaktives Material, das in der Lage ist, Li-Ionen einzulagern und abzugeben. Dazu eignen sich insbesondere Lithiumintercalationsverbindungen auf Basis von Kristallinen und/oder amorphem Kohlenstoff, Si, SnO₂ und Li₄Ti₅O₁₂. Auf Kohlenstoff basierende Verbindungen sind beispielsweise Graphit, Graphen, Kohlenstoff-Nanotubes und Acetylen Black.

Weiterhin können Si, Al, Sn, Sb und WO₂ als Wirtsverbindungen für die Li-Ionen-Intercalationsverbindungen für die Anode verwendet werden.

Der erfindungsgemäße Li-Ionen-Akkumulator kann weiterhin einen Separator enthalten, der den Anodenraum vom Kathodenraum trennt. Üblicherweise ist der Separator ein poröses nicht leitendes oder isolierendes Material, das die Anoden- und die Kathodenregion voneinander trennt oder isoliert und den Transport von Ionen durch den Separator zwischen dem Anoden- und dem Kathodenraum der Zelle erlaubt. Der Separator ist üblicherweise ausgewählt aus der Gruppe bestehend aus porösem Glas, poröser Keramik und porösem Polymeren.

Im Folgenden wird die Erfindung anhand von Beispielen weiter erläutert.

In allen dargestellten Beispielen wurde als Anode eine handelsübliche Anode auf Basis von Lithiumtitanat als Aktivmaterial eingesetzt. Das Lithiumtitanat stammt von der Firma Südchemie, die Elektrode setzte sich zusammen aus 88 Gew.-% Aktivmaterial, 7 Gew.-% PVdF "Kynar 761" (Polyvinylidenfluorid) und 5 Gew.-% Super-P (Leitruß). Als kathodenaktives Material wurde in allen Beispielen LiNi_{0,5}Mn_{1,5}O₄ auf Al-Folie als Stromsammler verwendet. Das LiNi_{0,5}Mn_{1,5}O₄ stammt von der Firma BASF, die Zusammensetzung der Elektrode war 88 Gew.-% Aktivmaterial, 7 Gew.-% PVdF "Kynar 761" (Binder) und 5 Gew.-% Super-P (Leitruß). Das flüssige Elektrolytsystem bestand jeweils aus einer Mischung von Ethylencarbonat/Propylencarbonat (1:1, V:V) mit LiPF₆ als Leitfähigkeitssalz in einmolarer Lösung. Die elektrochemischen Reaktionen solcher Zellen finden zwischen 4,5 und 4,9 V statt.

Die spezifischen Entladekapazitäten für die Kathoden aus den Beispielen 1 bis 8 bei der Konstantstromzyklisierung wurden mit einer cut-off Spannung von 4,9 V (vs. Li/Li⁺) zwischen 3,5 und 4,9 V bestimmt. Die Lade- und Entladegeschwindigkeit lag bei jeweils 1 C und es wurde jeweils für 0,25 Stunden Erhaltungsladen durchgeführt. Bei den Beispielen 1 bis 6 wurde die Temperatur konstant gehalten. Die Ergebnisse sind in Tabelle 1 gezeigt, es sind jeweils die Absolutwerte der spezifischen Entladekapazitäten und die auf den ersten Zyklus normierten spezifischen Entladekapazitäten in % dargestellt. Bei den Beispielen 7 und 8 wurde unter sonst gleichen Messbedingungen nach 80 Stunden Messdauer die Temperatur von 25 auf 40 °C erhöht und nach 120 Stunden Messdauer wieder auf 25 °C gesenkt. Während der gesamten Messungen der Beispiele 7 und 8 wurde Druck in der Zelle gemessen, der als Indikator für eine möglicherweise auftretende oxidative Zersetzung des Elektrolyten dient. Diese Messungen geben auch Aufschluss über die thermische Stabilität der Kathoden. Die Ergebnisse sind in Tabelle 2 zu sehen.

### Beispiel 1 (Vergleich):

Die Kathode weist lediglich eine nicht verdichtete Schicht des kathodenaktiven Materials auf. Es ist weder eine Schicht (a3) enthaltenden einen Li-Ionen leitenden Festelektrolyten vorhanden, noch liegt die Schicht (a2) verdichtet vor.

### Beispiel 2 (Vergleich):

Die Verdichtung der Kathode erfolgte durch mehrfaches Kalandrieren zwischen zwei Stahlwalzen. Die Elektrode wurde mehrmals durch den Kalander gezogen, bis der gewünschte Verdichtungsgrad erreicht wurde. Die Gesamtschichtdicke der kalandrierten Kathode betrug 40,75 Mikrometer, die Schichtdicke des Aktivmaterials (a2) betrug 11,25 Mikrometer. Durch das Kalandrieren wurde die Dicke der Schicht (a2) um 47,1 % reduziert.

### Beispiel 3 (Vergleich):

Auf eine kalandrierte Kathode gemäß Beispiel 2 wurde eine dünne SiO₂ Schutzschicht mittels APID aufgebracht (Schicht (a3)). Das feinteilige SiO₂ wurde dafür in Ethanol dispergiert und dann mittels des AIPD-Verfahrens aufgetragen. Die Schichtdicke der SiO₂-Schicht betrug nach Berechnung aus der Auftragsmenge 1 Mikrometer. Die Dickereduktion durch das Kalandrieren betrug 47,1 %, die Dicke der kathodenaktiven Schicht (a2) betrug 11,25 Mikrometer.

### Beispiel 4 (Vergleich):

Die Kathode wurde durch Kalandrieren, wie in Beispiel 2 beschrieben, stark verdichtet. Die Gesamtschichtdicke der kalandrierten Kathode betrug 37 Mikrometer, die Schichtdicke des Aktivmaterials (a2) betrug 7,5 Mikrometer. Durch das Kalandrieren wurde die Dicke der Schicht (a2) um 68,6 % reduziert.

### Beispiel 5 (Vergleich):

Auf die stark kalandrierte Kathode aus Bespiel 4 wurde eine dünne SiO₂ Schutzschicht mittels APID aufgebracht (Schicht (a3)). Die Schichtdicke der SiO₂-Schicht betrug nach Berechnung aus der Auftragsmenge 1 Mikrometer. Die Schichtdicke des Aktivmaterials (a2) betrug 7,5 Mikrometer. Durch das Kalandrieren wurde die Dicke der Schicht (a2) um 68,6 % reduziert.

### Beispiel 6 (erfindungsgemäß):

Auf eine nicht kalandrierte Kathode wurde zunächst eine Schicht dünne SiO₂ Schutzschicht mittels APID aufgebracht (Schicht (a3)). Anschließend wurde die Kathode (Schichten (a2) und (a3)) kalandriert und zum Schluss eine weitere dünne SiO₂ Schutzschicht mittels APID aufgebracht (weitere Schicht (a3)).

**Tabelle 1:**

| Beispiel | Zyklus | 1 | 2 | 10 | 50 | 70 | 100 |
|---|---|---|---|---|---|---|---|
| 1 (Vergleich) | Entladekapazität [mAhg⁻¹] | 518,58 | 520,07 | 482,22 | 251,13 | 186,34 | 168,65 |
| | [%] | 100 | 100,29 | 92,99 | 48,43 | 35,93 | 32,52 |
| 2 (Vergleich) | Entladekapazität [mAhg⁻¹] | 537,64 | 536,39 | 520,6 | 485,21 | 465,13 | 451,18 |
| | [%] | 100 | 99,77 | 96,83 | 90,25 | 86,51 | 83,92 |
| 3 (Vergleich) | Entladekapazität [mAhg⁻¹] | 512,35 | 519,56 | 506,88 | 483,39 | 466,98 | 432,07 |
| | [%] | 100 | 101,41 | 98,93 | 94,35 | 91,14 | 84,33 |
| 4 Vergleich | Entladekapazität | 580,37 | 587,09 | 570,44 | 509,9 | 475,02 | 464,22 |
| | [mAhg⁻¹] | | | | | | |
| | [%] | 100 | 101,16 | 98,29 | 87,86 | 81,85 | 79,99 |
| 5 (Vergleich) | Entladekapazität [mAhg⁻¹] | 538,79 | 536,66 | 534,83 | 486,76 | 475,71 | 460,55 |
| | [%] | 100 | 99,6 | 99,27 | 90,34 | 88,29 | 85,48 |
| 6 (erfindungsgemäß) | Entladekapazität [mAhg⁻¹] | 604,17 | 626,96 | 641,9 | 610,19 | 597,91 | 583,65 |
| | [%] | 100 | 103,77 | 106,24 | 101 | 98,96 | 96,6 |

Sowohl die Verdichtung der Schicht (a2) als auch das Aufbringen einer Schicht (a3) aus einem anorganischen Li-Ionen leitenden Festelektrolyt führt zu deutlich verbesserter Stabilität der Kathoden. Liegt die Schicht (a2) verdichtet vor und enthält die Kathode zudem noch eine Schicht (a3) aus einem anorganischen Li-Ionen leitenden Festelektrolyten wird eine weitere Verbesserung erreicht. Das beste Ergebnis zeigt die erfindungsgemässe Kathode, bei der auf die nicht verdichtete Schicht (a2) eine Schicht (a3) aufgebracht wurde, beide Schichten gemeinsam verdichtet wurden und eine weitere Schicht (a3) aufgebracht wurde. Diese Kathode zeigt die höchste spezifische Kapazität und die geringste Änderung der Kapazität der getesteten Kathoden.

### Beispiel 7 (Vergleich):

Eine Kathode gemäß Beispiel 1 wurde in einem dichten Li-Ionen-Akkumulator untersucht und unter Änderung der Temperatur der in der Zelle herrschende Druck gemessen. Nach 80 Stunden Messung bei 25°C wurde die Temperatur sehr schnell auf 40°C erhöht, für 40 Stunden bei 40°C gehalten und nach insgesamt 120 Stunden Messzeit sehr schnell auf 25 °C gesenkt und bis zum Ende der Messung nach insgesamt 240 Stunden bei diesem Wert gehalten.

### Beispiel 8 (erfindungsgemäß):

Eine Kathode gemäß Beispiel 6 wurde in einer dichten Li-Ionen-Akkumulator untersucht und unter Änderung der Temperatur der in der Zelle herrschende Druck gemessen. Nach 80 Stunden Messung bei 25°C wurde die Temperatur sehr schnell auf 40°C erhöht, für 40 Stunden bei 40°C gehalten und nach insgesamt 120 Stunden Messzeit sehr schnell auf 25 °C gesenkt und bis zum Ende der Messung nach insgesamt 240 Stunden bei diesem Wert gehalten.

**Tabelle 2**

| Messpunkt | Messzeit [Stunden] | Temperatur [°C] | Beispiel 7 Druck [mbar] | Beispiel 8 Druck [mbar] |
|---|---|---|---|---|
| 1 | 0 | 25/ | 1013,75 | 981,25 |
| 2 | 80 | 25 | 1013,02 | 984,79 |
| 3 | 80 | 40 | 1065,94 | 1033,33 |
| 4 | 120 | 40 | 1085,00 | 1039,69 |
| 5 | 120 | 25 | 1032,08 | 990,42 |
| 6 | 240 | 25 | 1063,85 | 994,58 |

Die Vergleichskathode aus Beispiel 7 zeigt vor der Temperaturerhöhung keine wesentliche Veränderung des Drucks, nach Erhöhung der Temperatur steigt der Druck kontinuierlich an, auch nachdem wieder die ursprüngliche niedrigere Temperatur von 25 °C eingestellt wurde. Zwischen den Messpunkten 2 und 3 nimmt der Druck um 1,8 % zu, zwischen den Messpunkten 5 und 6 nimmt der Druck um 3,1 % zu, insgesamt erhöht sich der Druck ab Einstellen der erhöhten Temperatur bis Messende um 5 %. Bei der erfindungsgemäßen Kathode aus Beispiel 8 liegen diese Werte bei 0,6 %, 0,4 % und 1 %. Die erfindungsgemäße Kathode aus Beispiel 8 zeigt somit eine deutlich verbesserte Temperaturstabilität hinsichtlich des Drucks und damit gegenüber oxidativer Zersetzung des Elektrolyts.

## Patentansprüche

1. Kathode (A) für Li-Ionen-Akkumulatoren umfassend
(a1) mindestens einen Stromsammler,
(a2) mindestens eine Schicht enthaltend mindestens ein kathodenaktives Li-Ionen einlagerndes/abgebendes Material,
wobei mindestens ein Teil der Schicht (a2) verdichtet ist und die der Anode zugewandte Seite der Schicht (a2) mindestens eine Schicht (a3) aufweist, die mindestens einen Li-Ionen leitenden Festelektrolyt enthält, wobei der Festelektrolyte aus der Gruppe bestehend aus anorganischen Festelektrolyten sowie Mischungen davon ausgewählt und in dem im Li-Ionen-Akkumulator verwendeten Elektrolytsystem (B) nicht löslich ist, charakterisiert dadurch, dass auf die noch nicht verdichtet vorliegende, mindestens eine Schicht (a2) zunächst eine Schicht (a3) enthaltend mindestens einen Li-Ionen leitenden Festelektrolyten aufgebracht wird, anschließend die Schichten (a2) und (a3) gemeinsam verdichtet werden und anschließend eine weitere Schicht (a3) enthaltend mindestens einen Li-Ionen leitenden Festelektrolyten aufgebracht wird.

2. Kathode (A) nach Anspruch 1, **dadurch gekennzeichnet, dass** die Li-Ionen leitenden anorganischen Festelektrolyte ausgewählt sind aus Oxiden von Metallen und Halbmetallen mit einer Schichtdicke von 1 nm bis 50 Mikrometer und keramischen, glasartigen und glaskeramischen Festelektrolyten.

3. Kathode (A) nach Anspruch 2, **dadurch gekennzeichnet, dass** die keramischen, glasartigen und glaskeramischen Festelektrolyten ausgewählt sind aus Oxiden, Sulfiden, Phosphaten und Mischungen davon.

4. Kathode (A) nach einem der Ansprüche 1 bis 3, **dadurch gekennzeichnet, dass** der mindestens eine Li-Ionen leitende Festelektrolyt ausgewählt ist aus der Gruppe bestehend aus den Oxiden Al₂O₃, SiO₂, ZrO₂ und TiO₂ mit einer Schicht-dicke von 1 nm bis 50 Mikrometer und den keramischen, glasartigen oder glaske-ramischen Festelektrolyten der Gruppe bestehend aus Li₂S-P₂S₅, Li₂S-P₂S₅-Li₄SiO₄, Li₂S-Ga₂S₃-GeS₂, Li₂S-Sb₂S₃-GeS₂, Li_{3,25}Ge_{0,26}P₀,₇₅S₄, Li_{4,2}Ge_{0,8}Ga_{0,2}S₄, Li_{2,2}Zn_{0,1}Zr_{1,9}S₃, Li₂S-GeS₂-P₂S₅, LI₂S-SiS₂-Al₂S₃, Li₂S-SiS₂-P₂S₅, Li₂S-SiS₂, Li₃PO₄-Li₂S-SiS₂, Li₂S-SiS₂-Li₄SiO₄, (La,Li)TiO₃ wie Li_{0,5}La_{0,5}TiO₃, Li₂₋ₓMg₂ₓTiO₃₊ₓ, Li₂ₓZn₂₋₃ₓTi₁₊ₓO₄, Li₅La₃Ta₂O₁₂, Li₆La₂CaTa₂O₁₂, Li₆La₂CaNb₂O₁₂, Li₆La₂SrNb₂O₁₂, Li₂Nd₃TeSbO₁₂, Li₃BO_{2,5}N_{0,5}, Li₉SiAlO₈, Li₂₊₂ₓZn₁₋ₓGeO₄, Li₁₋ₓAlₓGe₂₋ₓ(PO₄)₃, Li₁₊ₓTi₂₋ₓAlₓ(PO₄)₃, Li₁₊ₓTi₂₋ₓAlₓSi_{y}(PO₄)_{3-y}, LiTi_{0,5}Zr_{1,5}(PO₄)₃, LiₓAlZr[PO₄]₃, Li₃Fe₂(PO₄)₃.

5. Kathode (A) nach einem der Ansprüche 1 bis 4, **dadurch gekennzeichnet, dass** das mindestens eine kathodenaktive Material ausgewählt ist aus der Gruppe bestehend aus LiCoO₂, LiNiO₂, LiMn₂O₂, LiMnO₂, Li enthaltende Mischoxide mit Ni, Mn und/oder Co mit Metallen ausgewählt aus Mg, Zn, Al, Ga, W, Zr, Ti, Ca, Ce, Y und/oder Nb, LiFePO₄ und Spinellen der allgemeinen Formel LiMₓMn₂₋ₓO₄, mit M ausgewählt aus Cr, Ni, Co, Cu und/oder Fe, wobei 0 ≤ x ≤ 1 ist.

6. Verfahren zur Herstellung einer Kathode (A) nach einem der Ansprüche 1 bis 5 umfassend die Schritte
(i) Bereitstellen mindestens, einer Schicht (a2) enthaltend mindestens, ein kathodenaktives Material und mindestens einen Stromsammler,
(ii) Aufbringen mindestens einer Schicht (a3) enthaltend mindestens einen Festelektrolyt auf die Schicht (a2),
(iii) Verdichten der Schicht (a2) und der vorhandenen Schicht (a3) und
(iv) Aufbringen mindestens einer Schicht (a3) enthaltend mindestens einen Festelektrolyt auf die Schicht (a2).

7. Verfahren nach Anspruch,6, **dadurch gekennzeichnet, dass** die Schicht (a2) und die vorhandenes Schicht (a3) in Schritt (iii) durch Pressen, Walzen und/oder Kalandrieren verdichtet werden.

8. Verfahren nach Anspruch 7, **dadurch gekennzeichnet, dass** in Schritt (iii) die Dicke der Schicht (a2) und der vorhandenen Schicht (a3) um mindestens 10 %, bezogen auf die Gesamtdicke der Schicht (a2) und der ggf. vorhandenen Schicht (a3) vor dem Verdichten, reduziert wird.

9. Verfahren nach einem der Ansprüche 6 bis 8, **dadurch gekennzeichnet, dass** der mindestens eine Festelektrolyt In Schritt (ii) und (iv) durch Atmospheric Pressure Ion Deposition, Tintenstrahldruck oder pneumatisch aufgebracht wird.

10. Li-Ionen-Akkumulator umfassend
(A) eine Kathode nach einem der Ansprüche 1 bis 5,
(B) ein Li-Ionen leitendes flüssiges Elektrolytsystem und
(C) eine Anode.

11. Li-Ionen-Akkumulator nach Anspruch 10, **dadurch gekennzeichnet, dass** der Potentialunterschied zwischen Kathode und Anode mindestens 3 V beträgt.

12. Li-Ionen-Akkumulator nach Anspruch 10 oder 11, **dadurch gekennzeichnet, dass** die Anode mindestens ein anodenaktives Material ausgewählt aus der Gruppe bestehend aus Lithiuminterkalationsverbindungen auf Basis von kristallinem und/oder amorphen Kohlenstoff, Si, Sb, Al. Sn, WO₂, SnO₂ und Li₄Ti₅O₁₂ enthält.

13. Li-Ionen-Akkumulator nach einem der Ansprüche 10 bis 12, **dadurch gekennzeichnet, dass** das flüssige, Li-Ionen leitende Elektrolytsystem
(b1) mindestens ein nicht wässriges Lösungsmittel und
(b2) mindestens ein Li-ionen enthaltendes Elektrolytsalz
enthält.

14. Li-ionen-Akkumulator nach Anspruch 13, **dadurch gekennzeichnet, dass** das mindestens eine Lösungsmittel (b1) ausgewählt ist aus der Gruppe bestehend aus N-Methyl-acetamid, Acetonitril, Carbonaten, Sulfonen, N-substituierten Pyrrolidonen, azyklischen Ethern, zyklischen Ethern, Xylol, Siloxanen, Polyethern und Mischungen davon.

15. Li-ionen-Akkumulator nach Anspruch 13 oder 14, **dadurch gekennzeichnet, dass** das Li-ionen enthaltende Elektrolytsalz (b2) ausgewählt ist aus der Gruppe bestehend aus LiPF₈, LiBF₄, LiB(C₆H₅)₄, LiSbF₆, LiAsF₆, LiClO₄, LiCF₃SO₃, Li(CF₃SO₂)₂N, LiC₄F₉SO₃, LiAlO₄. LiAlCl₄, LiN(CₓF₂ₓ₊₁SO₂)(C_{y}F_{2y+1}SO₂), LiSCN, LiCl, LiBr und Lil.

## Claims

1. A cathode (A) for lithium ion accumulators, comprising
(a1) at least one current collector,
(a2) at least one layer comprising at least one cathode-active material which stores/releases lithium ions,
at least part of layer (a2) having been compacted and the side of layer (a2) facing the anode having at least one layer (a3) which comprises at least one solid electrolyte which conducts lithium ions, said solid electrolyte being selected from the group consisting of inorganic solid electrolytes and mixtures thereof and being insoluble in the electrolyte system (B) used in the lithium ion accumulator, wherein a layer (a3) comprising at least one lithium ion-conducting solid electrolyte is first applied to the at least one, as yet uncompacted layer (a2), then layers (a2) and (a3) are compacted together, and then a further layer (a3) comprising at least one lithium ion-conducting solid electrolyte is applied.

2. The cathode (A) according to claim 1, wherein the inorganic solid electrolytes which conduct lithium ions are selected from oxides of metals and semimetals having a layer thickness of 1 nm to 50 micrometers, and ceramic, glass-like and glass-ceramic solid electrolytes.

3. The cathode (A) according to claim 2, wherein the ceramic, glass-like and glass-ceramic solid electrolytes are selected from oxides, sulfides, phosphates and mixtures thereof.

4. The cathode (A) according to any of claims 1 to 3, wherein the at least one solid electrolyte which conducts lithium ions is selected from the group consisting of the oxides Al₂O₃, SiO₂, ZrO₂ and TiO₂ with a layer thickness of 1 nm to 50 micrometers, and the ceramic, glass-like or glass-ceramic solid electrolytes of the group consisting of Li₂S-P₂S₅, Li₂S-P₂S₅-Li₄SiO₄, Li₂S-Ga₂S₃-GeS₂, Li₂S-Sb₂S₃-GeS₂, Li_{3.25}Ge_{0.25}P_{0.75}S₄, Li_{4.2}Ge_{0.8}Ga_{0.2}S₄, Li_{2.2}Zn_{0.1}Zr_{1.9}S₃, Li₂s-GeS₂-P₂S₅, Li₂S-SiS₂-Al₂S₃, Li₂S-SiS₂-P₂S₅, Li₂S-SiS₂, Li₃PO₄-Li₂S-SiS₂, Li₂S-SiS₂-Li₄SiO₄, (La, Li)TiO₃ such as Li_{0.5}La_{0,5}TiO₃, Li₂-ₓMg₂ₓTiO₃₊ₓ, Li₂ₓZn₂₋₃ₓTi₁₊ₓO₄, Li₅La₃Ta₂O₁₂, Li₆La₂CaTa₂O₁₂, Li₆La₂CaNb₂O₁₂, Li₆La₂SrNb₂O₁₂, Li₂Nd₃TeSbO₁₂, Li₃BO_{2.5}N_{0.5}, Li₉SiAlO₈, L1₂₊₂ₓZn₁₋ₓGeO₄, Li₁₊ₓAlₓGe₂₋ₓ(PO₄)₃, L1₁₊ₓTi₂ₓAlₓ₍PO₄)₃, Li₁₊ₓTi₂₋ₓAlₓSi_{y}(PO₄)_{3-y}, LiTi_{0.5}Zr_{1.5}(PO₄)₃, LiₓAlZr[PO₄]₃, Li₃Fe₂(PO₄)₃.

5. The cathode (A) according to any of claims 1 to 4, wherein the at least one cathode-active material is selected from the group consisting of LiCoO₂, LiNiO₂, LiMn₂O₂, LiMnO₂, Li-comprising mixed oxides with Ni, Mn and/or Co with metals selected from Mg, Zn, Al, Ga, W, Zr, Ti, Ca, Ce, Y and/or Nb, LiFePO₄ and spinels of the general formula LiMₓMn₂₋ₓO₄, with M selected from Cr, Ni, Co, Cu and/or Fe, where 0 ≤ x ≤ 1.

6. A process for producing a cathode (A) according to any of claims 1 to 5, comprising the steps of
(i) providing at least one layer (a2) comprising at least one cathode-active material and at least one current collector,
(ii) applying at least one layer (a3) comprising at least one solid electrolyte to layer (a2),
(iii) compacting layer (a2) and the present layer (a3) and
(iv) applying at least one layer (a3) comprising at least one solid electrolyte to layer (a2).

7. The process according to claim 6, wherein layer (a2) and the present layer (a3) are compacted in step (iii) by pressing, rolling and/or calendering.

8. The process according to claim 7, wherein the thickness of layer (a2) and of the layer (a3) present is reduced in step (iii) by at least 10%, based on the total thickness of layer (a2) and of the optionally present layer (a3) before compaction.

9. The process according to any of claims 6 to 8, wherein the at least one solid electrolyte is applied in step (ii) and (iv) by atmospheric pressure ion deposition, inkjet printing, or by pneumatic means.

10. A lithium ion accumulator comprising
(A) a cathode according to any of claims 1 to 5,
(B) a lithium ion-conducting liquid electrolyte system and
(C) an anode.

11. The lithium ion accumulator according to claim 10, wherein the potential difference between cathode and anode is at least 3 V.

12. The lithium ion accumulator according to claim 10 or 11, wherein the anode comprises at least one anode-active material selected from the group consisting of lithium intercalation compounds based on crystalline and/or amorphous carbon, Si, Sb, Al, Sn, WO₂, SnO₂ and Li₄Ti₅O₁₂.

13. The lithium ion accumulator according to any of claims 10 to 12, wherein the liquid lithium ion-conducting electrolyte system comprises
(b1) at least one nonaqueous solvent and
(b2) at least one lithium ion-comprising electrolyte salt.

14. The lithium ion accumulator according to claim 13, wherein the at least one solvent (b1) is selected from the group consisting of N-methylacetamide, acetonitrile, carbonates, sulfones, N-substituted pyrrolidones, acyclic ethers, cyclic ethers, xylene, siloxanes, polyethers and mixtures thereof.

15. The lithium ion accumulator according to claim 13 or 14, wherein the lithium ion-comprising electrolyte salt (b2) is selected from the group consisting of LiPF₆, LiBF₄, LiB(C₆H₅)₄, LiSbF₆, LiAsF₆, LiClO₄, LiCF₃SO₃, Li(CF₃SO₂)₂N, LiC₄F₉SO₃, LiAlO₄, LiAlCl₄, LiN(CₓF₂ₓ₊₁SO₂) (C_{y}F_{2y+1}SO₂), LiSCN, LiCl, LiBr and LiI.

## Revendications

1. Cathode (A) pour accumulateurs à ions Li, comprenant
(a1) au moins un collecteur de courant,
(a2) au moins une couche contenant au moins un matériau actif en tant que cathode, incorporant/libérant des ions Li,
au moins une partie de la couche (a2) étant compactée et la face de la couche (a2) orientée vers l'anode présentant au moins une couche (a3) qui contient au moins un électrolyte solide conducteur des ions Li, l'électrolyte solide étant choisi dans le groupe constitué par les électrolytes solides inorganiques ainsi que leurs mélanges et n'étant pas soluble dans le système électrolytique (B) utilisé dans l'accumulateur à ions Li, **caractérisée en ce qu'**on applique d'abord, sur ladite au moins une couche (a2) non encore compactée, une couche (a3) contenant au moins un électrolyte solide conducteur des ions Li, on compacte ensuite les couches (a2) et (a3) ensemble, puis on applique une autre couche (a3) contenant au moins un électrolyte solide conducteur des ions Li.

2. Cathode (A) selon la revendication 1, **caractérisée en ce que** les électrolytes solides inorganiques conducteurs des ions Li sont choisis parmi les oxydes de métaux et de semi-métaux présentant une épaisseur de couche de 1 nm à 50 microns et les électrolytes solides céramiques, vitreux et vitrocéramiques.

3. Cathode (A) selon la revendication 2, **caractérisée en ce que** les électrolytes solides céramiques, vitreux et vitrocéramiques sont choisis parmi les oxydes, les sulfures, les phosphates et leurs mélanges.

4. Cathode (A) selon l'une quelconque des revendications 1 à 3, **caractérisée en ce que** ledit au moins un électrolyte solide conducteur des ions Li est choisi dans le groupe constitué par les oxydes Al₂O₃, SiO₂, ZrO₂ et TiO₂ présentant une épaisseur de couche de 1 nm à 50 microns et les électrolytes solides céramiques, vitreux ou vitrocéramiques du groupe constitué par Li₂S-P₂S₅, Li₂S-P₂S₅-Li₄SiO₄, Li₂S-Ga₂S₃-GeS₂, Li₂S-Sb₂S₃-GeS₂, Li_{3,25}Ge_{0,25}P_{0,75}S₄, Li_{4,2}Ge_{0,8}Ga_{0,2}S₄, Li_{2,2}Zn_{0,1}Zr_{1,9}S₃, Li₂S-GeS₂-P₂S₅, Li₂S-SiS₂-Al₂S₃, Li₂S-SiS₂-P₂S₅, Li₂S-SiS₂, Li₃PO₄-Li₂S-SiS₂, Li₂S-SiS₂-Li₄SiO₄, (La,Li)TiO₃ tel que Li_{0,5}La_{0,5}TiO₃, Li₂₋ₓMg₂ₓTiO₃₊ₓ, Li₂ₓZn₂₋₃ₓTi₁₊ₓO₄, Li₅La₃Ta₂O₁₂, Li₆La₂CaTa₂O₁₂, Li₆La₂CaNb₂O₁₂, Li₆La₂SrNb₂O₁₂, Li₂Nd₃TeSbO₁₂, Li₃BO_{2,5}N_{0,5}, Li₉SiAlO₈, L1₂₊₂ₓZn₁₋ₓGeO₄, L1₁₋ₓAlₓGe₂₋ₓ(PO₄)₃, L1₁₊ₓTi₂₋ₓAlₓ(PO₄)₃, Li₁₊ₓTi₂₋ₓAlₓSi_{y}(PO₄)_{3-y}, LiTi_{0,5}Zr_{1,5}(PO₄)₃, LiₓAlZr[PO₄]₃, Li₃Fe₂(PO₄)₃.

5. Cathode (A) selon l'une quelconque des revendications 1 à 4, **caractérisée en ce que** ledit au moins un matériau actif en tant que cathode est choisi dans le groupe constitué par LiCoO₂, LiNiO₂, LiMn₂O₂, LiMnO₂, les oxydes mixtes contenant Li avec Ni, Mn et/ou Co avec des métaux choisis parmi Mg, Zn, Al, Ga, W, Zr, Ti, Ca, Ce, Y et/ou Nb, LiFePO₄ et les spinelles de formule générale LiMₓMn₂₋ₓO₄, M étant choisi parmi Cr, Ni, Co, Cu et/ou Fe, 0 ≤ x ≤ 1.

6. Procédé pour la fabrication d'une cathode (A) selon l'une quelconque des revendications 1 à 5, comprenant les étapes de :
(i) mise à disposition d'au moins une couche (a2) contenant au moins un matériau actif en tant que cathode et au moins un collecteur de courant,
(ii) application d'au moins une couche (a3) contenant au moins un électrolyte solide sur la couche (a2),
(iii) compactage de la couche (a2) et de la couche (a3) appliquée et
(iv) application d'au moins une couche (a3) contenant au moins un électrolyte solide sur la couche (a2).

7. Procédé selon la revendication 6, **caractérisé en ce que** la couche (a2) et la couche (a3) appliquée sont compactées dans l'étape (iii) par pressage, laminage et/ou calandrage.

8. Procédé selon la revendication 7, **caractérisé en ce que** dans l'étape (iii), l'épaisseur de la couche (a2) et de la couche appliquée (a3) est réduite d'au moins 10%, par rapport à l'épaisseur totale de la couche (a2) et de la couche (a3) le cas échéant appliquée avant le compactage.

9. Procédé selon l'une quelconque des revendications 6 à 8, **caractérisé en ce que** ledit au moins un électrolyte solide est appliqué dans l'étape (ii) et (iv) par dépôt d'ions à pression atmosphérique, impression par jet d'encre ou pneumatiquement.

10. Accumulateur à ions Li, comprenant
(A) une cathode selon l'une quelconque des revendications 1 à 5,
(B) un système électrolytique liquide conducteur des ions Li et
(C) une anode.

11. Accumulateur à ions Li selon la revendication 10, **caractérisé en ce que** la différence de potentiel entre la cathode et l'anode est d'au moins 3 V.

12. Accumulateur à ions Li selon la revendication 10 ou 11, **caractérisé en ce que** l'anode contient au moins un matériau actif en tant qu'anode choisi dans le groupe constitué par les composés d'intercalation de lithium à base de carbone cristallin et/ou amorphe, de Si, de Sb, d'Al, de Sn, de WO₂, de SnO₂ et de Li₄Ti₅O₁₂.

13. Accumulateur à ions Li selon l'une quelconque des revendications 10 à 12, **caractérisé en ce que** le système électrolytique liquide, conducteur des ions Li, contient
(b1) au moins un solvant non aqueux et
(b2) en moins un sel électrolytique contenant des ions Li.

14. Accumulateur à ions Li selon la revendication 13, **caractérisé en ce que** ledit au moins un solvant (b1) est choisi dans le groupe constitué par le N-méthylacétamide, l'acétonitrile, les carbonates, les sulfones, les pyrrolidones N-substituées, les éthers acycliques, les éthers cycliques, le xylène, les siloxanes, les polyéthers et leurs mélanges.

15. Accumulateur à ions Li selon la revendication 13 ou 14, **caractérisé en ce que** le sel électrolytique contenant des ions Li (b2) est choisi dans le groupe constitué par LiPF₆, LiBF₄, LiB(C₆H₅)₄, LiSbF₆, LiAsF₆, LiClO₄, LiCF₃SO₃, Li(CF₃SO₂)₂N, Lic₄F₉SO₃, LiAlO₄, LiAlCl₄, LiN(CₓF₂ₓ₊₁SO₂) (C_{y}F_{2y+1}SO₂), LiSCN, LiCl, LiBr et LiI.
